# EUROPEAN PATENT APPLICATION

(11) **EP 3 795 847 A1**
(43) Date of publication of application: **24.03.2021**
(21) Application number: 19382803.5
(22) Date of filing: 17.09.2019
(51) Int. Cl.: F16B 39/24, F16B 39/282, F16B 43/00, B64C 3/00

(54) **WASHER**

(71) Applicant: Airbus Operations, S.L.U., 28906 Getafe (Madrid) (ES)
(72) Inventor: SERRANO VELAZ, Cesar, 28906 Getafe (Madrid) (ES); ORCHA VILLACORTA, Julio, 28906 Getafe (Madrid) (ES)
(74) Representative: Herrero & Asociados, S.L.

(57) **Abstract**

Washer (1) comprising a pair of rings (2), each comprising a helical surface (3) and a flat surface (4), the helical surface (3) having a helical angle (α ) with respect to the flat surface (4), wherein the helical surfaces (3) of both rings (2) are intended to face each other, so that the flat surfaces (4) of both rings (2) are contained in parallel planes, wherein at least one flat surface (4) has a termination comprising a plurality of indentations improving the gripping of said flat surface.

## Description

### TECHNICAL FIELD OF THE INVENTION

The present invention refers to a washer applicable for fastening assemblies, particularly for fastening bolted joints where the bolt rotation or bolt preload relaxation along the life cycle of the element might lead to a technical issue or a risky situation. Given security advantages of the invention, it can be specifically used for fastening joints of all components and elements of an aircraft, thereby it is applicable in the technical field of mechanical assembled parts and components of the industry, and more specifically in the aeronautical industry of aeronautics.

### BACKGROUND OF THE INVENTION

The components and elements comprised by the aeronautical structures are subject to critical requirements regarding their performance during their life. In this sense the clamping force, i.e. bolt preload, provided by a fastener during its installation in an assembled joint has a significant effect on the performance of the joint, especially on its fatigue life as well as on other critical requirements for aeronautical structures, i.e. lightning strike protection, fuel tightness, leakage, and the like. In the installation, higher preload leads to a better fatigue behavior.

Nevertheless, despite of the preload, an undesired "unscrewing" of the assembly may happen, with the subsequent loosening of the nut or bolt, depending on several issues and conditions, such as the shear dynamic loads versus displacements, as well as the friction coefficient between the bolt and nut threads, the friction of the bolt bearing head and the nut bearing surface with the surface of the structure, and the like.

Another undesired effect that can be observed in assembled joints is the rotation of the fastener.

The above-mentioned undesired effects are caused because, after the fastener installation, there is generally a "natural" or spontaneous preload relaxation due to the deformation of the element's surface, restructuration of the crystalline structure of the bolt, etc.

Said preload relaxation and indicated effects have to be careful considered, having into account the real "in-service" aircraft variables, such as static & fatigue applied loads, temperature, materials, and the like, because it can even lead to undesirable technical situations, like bolt/nut unscrewing.

In order to avoid this critical situation and the problems involved in the preload relaxation, there exists nowadays a wide range of commercial solutions intended to prevent it, as well as the above-mentioned unscrewing or slackening. Some of those solutions are disc or conical spring washers, screw and washer assemblies, nuts with captive washer, castellated nuts, special thread rolling screws, threaded inserts, deformed threads bolts, threads with adhesive, serrated washers and nuts, "crimped" nuts, spring washers and nuts, "hard" lock nuts, nylon insert nuts, or special "wedge-lock" washers, commercially known as "Nord-lock" washers.

The solutions indicated above aim to reduce the previous indicated relaxation issues, although they cannot be absolutely avoided at all. Anyway, each of the solutions has specific advantages and drawbacks that must be considered when applying them to a particular application.

For instance, mentioned "wedge-lock" washers, can damage the surface of the components that are going to be joined and submitted to a high preload due to the nailing of the washer teeth, this being critical when used on soft metallic materials and/or non-metallic ones, such as composites.

Likewise, amongst all these solutions, there is a commonly used system for maintaining preloaded a set of elements consisting of a pair of rings that fit between them in such a way that each one provides a flat surface side, while the other side is made showing an helicoidally form; both rings are placed between the set of elements of the system intended to be maintained preloaded in such a manner that while a tension force is applied to the elements to be loaded, the rings are rotated and tightened taking the advantage of the helicoidally angle; once the tension force between the set of elements is removed, the system is totally fixed, the rings remaining submitted to a compression force.

Nowadays, this solution is typically used, for example, in fatigue testing machines in order to avoid any movement or relaxation of the set of elements that compose the "chain" of all load elements. Nevertheless, when comparing this solution with, for instance, "wedge-lock" type washers, this system does not produce any damage in the surface of the elements to be joined, although there is a higher probability of issues regarding the rotation of the bolts.

Anyway, as mentioned above, all the solutions aim to reduce the relaxation, bolts rotation, unscrewing, etc. issues. Nevertheless, such issues cannot be completely avoided.

### DESCRIPTION OF THE INVENTION

The present invention relates to a washer for fastening joints as defined by claim 1. The invention overcomes the above-mentioned drawbacks by combining the technical teachings of two solutions of the prior art, the so called "wedge-lock" type washer and the pair rings having helical sides. The "wedge-lock" washer provides a significant improvement on avoiding the relaxation issues however an important drawback is the possible damage that can be produced on the surface of the components that are going to be joined, overall in composites.

It is an object of the invention to improve the behavior of fastened joints, trying to reduce the slackening effects as preload relaxation, creep, and the like, as well as minimizing the possibility of having the rotation and/or unscrewing of the bolts, thereby ensuring the joint performance along the whole life cycle of the aircraft.

The washer comprises a pair of rings, each of the rings comprising a helical surface and a flat surface, the helical surface having a helical angle (α) with respect to the flat surface, wherein the helical surfaces of both rings are intended to face, fit or match each other, so that the flat surfaces of both rings are contained in parallel planes.

According to the invention, at least one flat surface has a termination comprising a plurality of indentations and/or ridges improving the gripping of said at least one flat surface.

The flat surfaces are placed just in contact with the surface of the component/element to be fastened (B), usually a structural element, and the own fastening element (A) i.e. base of a nut (C) and/or bolt head (A) bearing surface. The surface termination or treatment of the flat surface includes any type of profile, i.e. radial surface indentations, grooves, and the like, got from machining, stamping, knurling or any other way. Thereby, the adherence between the surfaces involved is improved and the rotation or unscrewing of the fastening element (A) is avoided.

The washer can be placed so under the bolt head (A) as well as between the nut (C) and the component/element to be fastened (B), or on both sides; washers installed under the bolt head (A) shall provide a chamfer in the flat side of the element just in contact with the bolt head (A) to save the head to shank radius.

It is contemplated that the indentations and/or ridges have smooth profiles, but never acute profiles in order to avoid damages to the surfaces.

Likewise, the indentations and/or ridges can be distributed along said at least one flat surface according to a pattern. In this sense, according to a preferred embodiment of the invention, at least one surface is knurled.

Preferably, the helical angle (α) is higher than the thread pitch angle (β) of a fastening element (A) that collaborates with the washer.

The helical angle must be bigger than the one of the thread of the fastening system in order to make more difficult the rotation of the nut (C) in the "unscrewing" direction.

Washers can be manufactured with different "helix" angle, "knurled" types, as well as materials, thicknesses, etc. Possible "knurled" types can be specifically designed (configuration, shape, dimensions, etc.) or they can be defined and can be made in accordance to specification DIN82 or any other equivalent one, as reference.

Surfaces with proposed "knurled" type does not produce any damage on the materials surface to join, whatever they are as metallic, composite, etc., but at any case the type, size, and configuration can be selected to adapt it to the specific mechanical properties of the materials to join. Similarly, the material of the washer can be changed to the most appropriate one in terms of accomplishing conventional engineering requirements as for example galvanic corrosion compatibility, rigidity, etc. (i.e. Titanium, corrosion resistant steel, any hard metal in general, etc.).

Similarly, the "helicoidally" or "helix" angle can be selected in order to achieve an optimum one for avoiding the bolt/nut system to be loosened.

It is contemplated the said at least one flat surface is coated with a product increasing the adherence. The surface of the "knurled" side of the washer parts can be coated with some adhesive, or product (sealant, etc.) that would increase the adherence to the structure surfaces, and so the strength of the fastening elements to rotate / unscrewing.

### BRIEF DESCRIPTION OF THE DRAWINGS

For a better comprehension of the invention, the following drawings are provided for illustrative and non-limiting purposes, wherein:
Figure 1 schematically shows a perspective view of an embodiment of a washer according to the invention.
Figure 2 shows a longitudinal section of a joint comprising a bolt and two washers according to the invention, one located at each side of the component/element to be joined.

### PREFERRED EMBODIMENT OF THE INVENTION

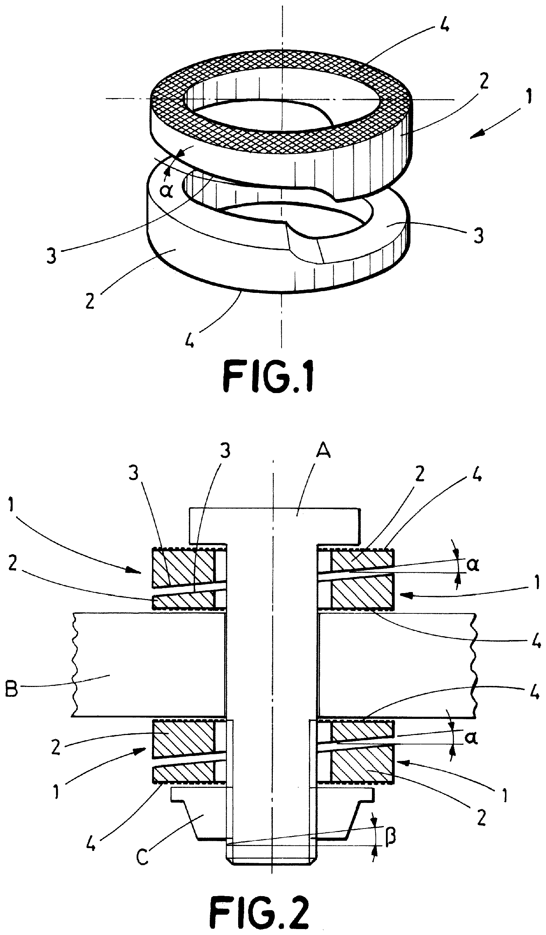

As shown in the embodiment represented in figure 1, the washer (1) comprises a pair of rings (2), each of the rings (2) comprising a helical surface (3) and a flat surface (4), the helical surface (3) having a helical angle (α) with respect to the flat surface (4).

The helical surfaces (3) of both rings (2) are intended to face each other, so that the flat surfaces (4) of both rings (2) are contained in parallel planes when assembled, as shown in figure 2.

According to a preferred embodiment the flat surfaces (4) have a termination comprising a plurality of indentations and/or ridges improving the gripping of the flat surfaces (4). Preferably, the flat surfaces (4) are knurled.

As can be appreciated in figure 2, the flat surfaces (4) are placed just in contact with the surface of the component/element to be fastened (B) and the own fastening element (A), i.e. base of the nut and/or bolt head bearing surface. The washer (1) can be placed so under the bolt head (A) as well as between the nut (C) and the component/element to be fastened (B), or on both sides; washers (1) installed under the bolt head (A) shall provide a chamfer in the flat side of the element just in contact with the bolt head (A) to save the head to shank radius.

The helical angle (α) is higher than the thread pitch angle (β) of a fastening element (A) that collaborates with the washer (1). This allows to make more difficult the rotation of the nut (C) in the "unscrewing" direction.

The flat surfaces (4) can be coated with a product increasing the adherence. The surface of the "knurled" side of the washer parts can be coated with some adhesive, or product (sealant, etc.) that would increase the adherence to the structure surfaces, and so the strength of the fastening elements to rotate / unscrewing.

## Claims

1. Washer (1) comprising a pair of rings (2), each of the rings (2) comprising a helical surface (3) and a flat surface (4), the helical surface (3) having a helical angle (α) with respect to the flat surface (4), wherein the helical surfaces (3) of both rings (2) are intended to face each other, so that the flat surfaces (4) of both rings (2) are contained in parallel planes, **characterized in that** at least one flat surface (4) has a termination comprising a plurality of indentations and/or ridges improving the gripping of said at least one flat surface (4).

2. Washer (1) according to claim 1, wherein the indentations and/or ridges have smooth profiles.

3. Washer (1) according to any of the preceding claims, wherein the indentations and/or ridges are distributed along said at least one flat surface (4) according to a pattern.

4. Washer (1) according to claim 3, wherein the at least one surface is knurled.

5. Washer (1) according to any of the preceding claims, wherein the helical angle (α) is higher than a thread pitch angle (β) of a fastening element (A) that collaborates with the washer (1).

6. Washer (1) according to any of the preceding claims, wherein the at least one flat surface (4) is coated with a product increasing the adherence.
